# EUROPEAN PATENT APPLICATION

(11) **EP 3 543 000 A1**
(43) Date of publication of application: **25.09.2019**
(21) Application number: 18163138.3
(22) Date of filing: 21.03.2018
(51) Int. Cl.: B29C 70/34, B27D 1/08, B27N 5/00, B32B 21/04, B32B 21/08

(54) **MANUFACTURING METHOD OF SHAPED MULTI-LAYER PLANT-FIBRE BASED COMPONENTS**

(71) Applicant: EMPA Eidgenössische Materialprüfungs- und Forschungsanstalt, 8600 Dübendorf (CH); ETH Zürich, 8092 Zürich (CH); Universität Stuttgart, 70174 Stuttgart (DE)
(72) Inventor: RÜGGEBERG, Markus, 8604 Volketswil (CH); BURGERT, Ingo, 8008 Zürich (CH); GRÖNQUIST, Philippe, 8052 Zürich (CH); MENGES, Achim, 60327 Frankfurt (DE); WOOD, Dylan, 70469 Stuttgart (DE)
(74) Representative: Schneider Feldmann AG Patent- und Markenanwälte

(57) **Abstract**

The disclosed invention consists of a manufacturing method of complex shaped laminated multi-layer plant-fibre based construction components (4) of isotropic or anisotropic plant-fibre based elements (0, 0'), which is more cost-efficient and resource-efficient by producing less waste. This is reached while plant-fibre based elements (0, 0') are deformed by a self-forming shape-change step (II) forming shape-changed plant-fibre based components (3) by application of an input stimulus (2) change from initial condition with initial wood moisture content (U1) and initial Temperature (T1) to service condition with end wood moisture content (U2) and end Temperature (T2) for a wood moisture change delta U between 1% to 20% and/or a Temperature change between 0°C and 70°C, before the shape-changed plant-fibre based components (3) are stacked and connected in a stacking and fixing step (III) forming shaped laminated multi-layer plant-fibre based construction components (4) for further treatment.

## Description

### TECHNICAL FIELD

The present invention describes a manufacturing method of shaped laminated multi-layer plant-fibre based construction components of isotropic or anisotropic plant-fibre based elements.

### STATE OF THE ART

More or less complex shaped multi-layer construction components of either isotropic or anisotropic material, like curved wood or wood plastic parts are for example interesting for applications in architecture, for construction of housing and ceilings, for wood construction companies or furniture manufacturers.

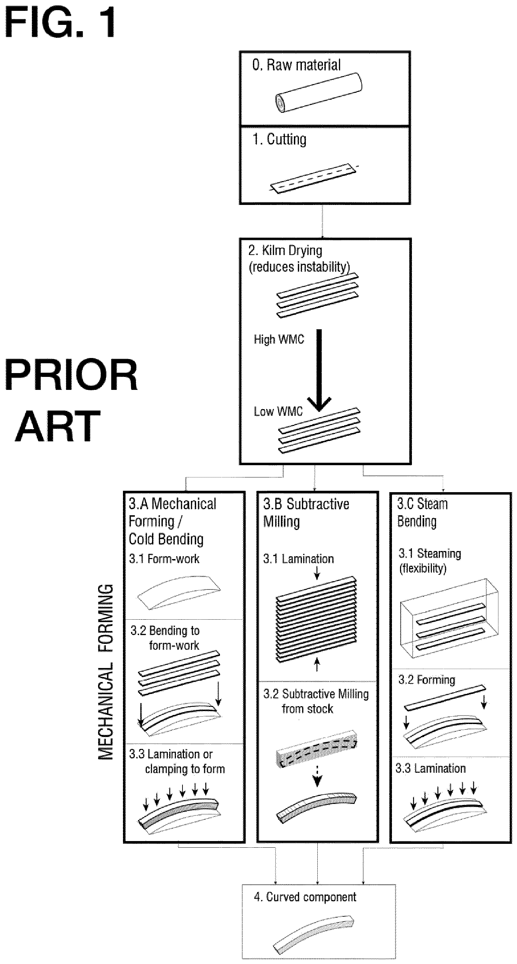

There are methods known for producing shaped multi-layered components as curved wood parts, for example cold and hot form bending as the most common method used by industry and craftsmen to produce large curved wood parts. Layers or sheets of wood are physically bent onto a negative formwork and screwed, vacuum, or press laminated together with adhesive, as shown in Figure 1.

The required formworks are expensive and eventually use more material than used in the parts. Some formworks can be re-used but require adjustment and reconfiguration for every new geometry; a good part of the formworks are only used once before being discarded. Adjustable hydraulic presses exist for producing single curved glue laminate wood parts with custom curvatures. In form bending, the yield strength of wood limits the thickness of the profile shape and dimensions which can be shaped. The higher the curvatures, the thinner layers or smaller profiles of formwork are required. The use of thinner layers generally result in more material waste, more labor for assembly, and, thus, considerably higher costs. In most cases, high costs economically limit the level of curvature to be reached by the conventional manufacturing procedures. Of further disadvantage is the fact that the force of bending leaves the part in a stressed state leading to spring back from the formwork and creep over time.
Form bending is also used to produce furniture scale parts with high curvatures and detail using thin veneer layers. However, at the scale of a building component such thin layers are not practical. Steam bending wood into shape allows for the manufacturing of high curvature wood parts from thicker layers by making the wood more flexible at high moisture content and high temperature before physically forming it. This process requires formwork and high forces to bend and hold the wood in place for an extended time. This also requires extra energy for creating steam.

Other methods of producing curved wood parts by companies including "Flexible Plywood" (e.g. company Radius Bending Plywood), "SD Veneer" - (e.g. companies Reholz/Danzer), and "Cold-Bend Hardwood TM" (company Pure Timber LLC) use modifications to the wood structure, weakening of the wood structure at different scales, or changes in the layering in plywood to achieve higher curvatures than possible with non-modified wood. While these procedures allow the wood to be bent, they still require formwork and an external force to manufacture a curved part. Often, these parts are used only as a covering of a substructure or material. These methods are typically used for small scale production of art, furniture, and exhibition pieces. Curved wood parts can be subtractive milled from standard rectilinear glue laminated and cross laminated timber blanks or from slightly curved parts. This produces a lot of waste material and results in parts with the wood fiber orientation not being aligned with that of the curved part.

Environmentally actuated wood bilayers and wood composite bilayers have been studied extensively in the past 5-10 years (Holstov et al. 2015 & 2017; Menges & Reichert, 2012; Reichert et al. 2014; Ruggeberg & Burgert 2015, Vailati et al. 2017). Here, the aim is upscaling, which is facilitated by the unique combination of material properties of wood. So far, a manufacturing method of complex shaped multi-layered wood components could not be achieved as desired.

Besides wood bilayers, US2016339627 shows another method reaching a transformable material, comprising a base material having a natural shape, with a second material disposed on the base material in a particular pattern so as to impose a transformed shape on the base material, the transformed shape being different than the natural shape. More particularly, the base material is a stretchable 2-dimensional material, and is subjected to pre-stressing before and during disposition of the second material, whereupon after release of the stress, the stretchable base material with the disposed second material thereon automatically transform into a predetermined 3-dimensional manufactured shape. This method needs elastic energy put into the material by externally applied force (stretching) to create a 3d shaped bilayer from two initially flat layers, which will remain stable after joining. This works best for largely stretchable rubber-like materials, but not with construction materials such as wood.

In US2016340826, an active self-transformable material is disclosed comprising a flexible base material with an active material disposed on or within the flexible base material in a specific pattern. More particularly, the active material and the flexible base material differ in properties such that the active material is reactive to an external stimulus trigger that causes an automatic transformation of the active self-transformable material into a predetermined 3-dimensional transformed shape. The method is only promising for flexible base materials, while the base material is reacting in a certain way to an external stimulus trigger. Although this method could in principle be applied to first and second layer of wood or another isotropic or anisotropic multi-layered component, it would not allow to reach more complex shapes at lower costs and less waste. In particular, this methods involves breaking down the material to smaller fibers which is a disadvantage for larger parts because more processing and additional materials are required to reach the strength of wood.

### DESCRIPTION OF THE INVENTION

The object of the present invention is to create a more cost-efficient manufacturing method being more resource-efficient by producing less waste while manufacturing shaped laminated fibre based components for different applications with higher curvatures and more complex shapes in a reproducible way. Experiments have shown that even the shape retention of the shaped laminated plant-fibre based components could be improved with this method.

Another object of the subject matter of the invention is to provide a manufacturing method avoiding formwork and allowing mass customization

### BRIEF DESCRIPTION OF THE DRAWINGS

Further understanding of various aspects of the invention can be obtained by reference to the following detailed description in conjunction with the associated drawings, which are described briefly below.
Figure 1 shows a scheme of prior art manufacturing methods for curved beams and shells, comprising cutting, drying and different mechanical forming and gluing steps.
Figure 2 shows a scheme of a manufacturing method of shaped laminated plant-fibre based components of either isotropic or anisotropic material according to the invention with a self-forming shape-change step.
Figure 3 shows a schematic manufacturing process of curved beams and shells with different structural levels of a shaped laminated plant-fibre based component from multi-element bilayer and in-plane layer to final shaped laminated plant-fibre based component. The inner lines indicate the fibre orientation in the single plant-fibre based elements.
Figure 4 a) shows multi-layer configurations comprising at least two cut plant-fibre based elements with indicated fibre orientation in each layer (rotation angle),
   b) fibre angles between each of the plant-fibre based element layers and
   c) the resulting deformation of the final shape-changed laminated plant-fibre based component achieving bending, twisting and twisting helices.
Figure 5 shows a photography of a prototype of a multi-layered shaped laminated plant-fibre based component manufactured with the claimed method, comprising six bilayers of spruce wood.

### DESCRIPTION

A manufacturing method for shaped multi-layered components will be described. This method can be used for different materials, which exhibit isotropic or anisotropic dimensional changes upon different appropriate input stimuli 2. The materials should be capable of being manufactured in a layered structure. The following description specifically refers exemplary to plant-fibre based materials and composites, for example wood, modified wood (chemically and physically), wood based materials, engineered wood products, wood-plastic composite materials, cellulose composite materials, 3D printed wood fibre or cellulose based materials and structures. The process results in complex shaped multi-layered plant-fibre based components.

For the case of wood as raw material or plant-fibre based elements, different wood species can be used and one or more than one wood species may be used within one component or part. In one case, a wood species can be beech wood, in another case, this can be spruce wood.

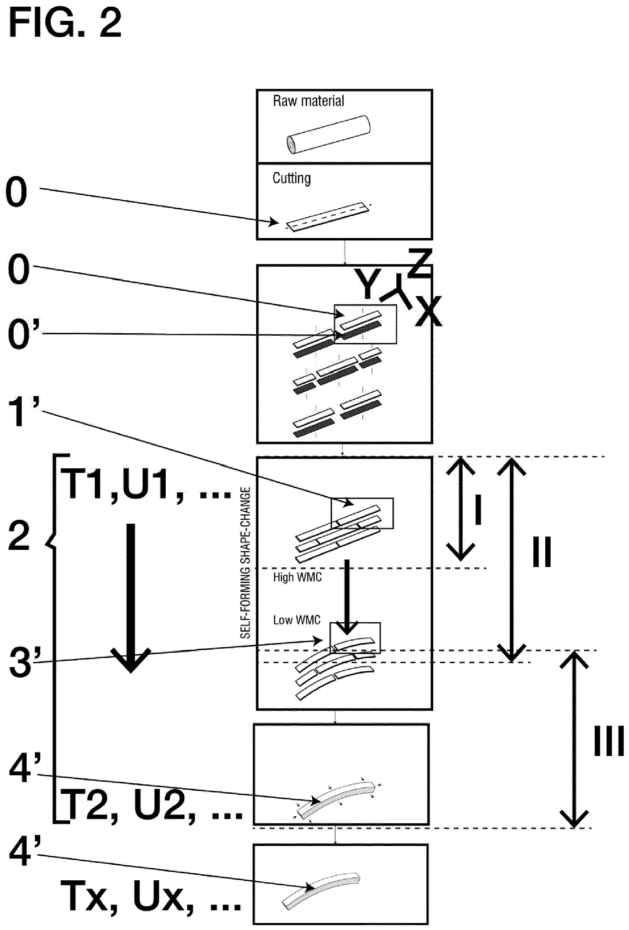

Figure 2 shows a scheme of a stepwise production method starting for example with pieces of wood as raw material. The raw material is cut into pieces forming plant-fibre based elements 0, 0' with different known dimensional changes in known directions, if a defined input stimulus 2, respectively a change of an input stimulus 2, is applied. For the chosen plant-fibre based elements 0, 0', the resulting shape change or curvature when applying the stimulus 2 has to be predicted for practical application, to reach the desired results. The prediction could be according to a rule of thumb or calculated by a simulation software.

The plant-fibre based elements 0, 0' are mono-layers, which either are combined in z-direction (out of plane) or in x,y-direction (in plane) and connected by a first adhesive, forming multi-element plant-fibre based components 1. In this multi-element joining step I, multiple multi-element plant-fibre based components 1', 1" are formed in an initial state or in a first forming condition.
In case, the single plant-fibre based elements 0, 0' are connected out of plane, multi-element bilayers 1' are formed as shown in Figure 2 as an example in the multi-element joining step I.

The multi-element plant-fibre based components 1 are comprising at least two plant-fibre based elements 0, 0' joined together, forming loose multi-element plant-fibre based components 1 without interconnection, which are further processed in a following self-forming shape-change step II.

The used input stimulus can be a change of relative humidity (RH), with or without a temperature change. This input stimulus leads to a certain sample moisture content U. It is possible, that with the here described method a first plant-fibre based elements 0 is initially equilibrated at sample moisture content U1, while the second plant-fibre based element 0' is equilibrated at a sample moisture content U1'≠ U1. But both plant-fibre based elements 0, 0' are equilibrated to U2 after stimulus 2 change in self-forming shape-change step II.

While the self-forming shape-change step II is carried out, the change of the conditions in terms of Relative humidity (RH1) and/or Temperature (T1) to a second condition with a second Relative humidity (RH2) and/or a second Temperature (T2) takes place. This change of condition is called change of stimulus 2, wherein the specimen are transferred from a climate with certain Temperature and Relative humidity to a different climate with different relative humidity and/or temperature, resulting in an increase or decrease of the sample moisture content from an initial sample moisture content U1, U1' at a sample temperature T1 to a second sample moisture content U2 and/or sample Temperature T2. In practice, in case of layering plant-fibre based elements 0, 0' in z-direction, in many cases, we only need to change the moisture content of one plant-fibre based element 0, 0'.

Depending on the behaviour of the plant-fibre based elements 0, 0' at a certain condition and input stimulus 2, the sample moisture content will be increased or decreased from the first condition to the second condition.

Due to different dimensional changes in one direction while changing the stimulus 2 of both joint plant-fibre based elements 0, 0', the multi-element plant-fibre based component 1 is self-forming, which results in a shape change from the multi-element plant-fibre based components 1 to resulting shape-changed plant-fibre based components 3 at the second condition RH2, T2 or others.

The shape change of the multi-element plant-fibre based components 1 is achieved by transforming dimensional changes of the different plant-fibre based elements 0, 0' in response to changes of the input stimulus 2 into shape changes.

These shape-changed plant-fibre based components 3 are still not interconnected. The interconnection takes place within a final stacking and fixing step III. Shape-changed laminated plant-fibre based components 3 are stacked as desired directly after treatment with the stimulus 2 change forming stacks of shaped laminated multi-layer plant-fibre based construction components 4. The stacking is done in z-direction, forming stacks of shaped laminated plant-fibre based construction components 4, which are joint by a second adhesive and vacuum lamination. In addition components can be also joined in x-y direction.

After the stacking and fixing step III, the shape of the resulting shaped laminated multi-layer plant-fibre based construction component 4 is dimensionally stable, even in further changed condition. The resulting shaped laminated multi-layer plant-fibre based construction components 4 can be used for example as parts of furnitures, as cross-laminated timber (CLT) in constructions, buildings or in architectural application.

So far, the dimensional instability of plant-fibre based elements 0, 0' or wooden plastic elements has commonly been seen as drawback and limitation rather than as a capacity for the use of wooden plastic elements as a basis for shaped construction material. For the proposed process, combinations of more than one wood species are possible, with any kind of wood species being suitable, which exhibit dimensional changes for example upon changes of their wood moisture content or more general sample moisture content.

The proposed process is universal in a way that the same process can be used to produce almost any kind of final shape of the resulting shaped laminated multi-layer plant-fibre based construction components 4. New levels of complexity in shape can be achieved without extensive milling. In contrast to current technologies and manufacturing processes of curved wood components as shown in Figure 1, no formwork is needed within the proposed process as shown in Figure 2, which saves materials and costs. In cases, where high curvatures and complex shapes could not be achieved by formbending, extensive milling has been used. This produces high amounts of waste, but has been the only economically feasible way to achieve high curvatures. This milling will largely be avoided by the here proposed process. The shape change is programmed in the layout and is achieved through changing sample moisture content U (by drying or wetting) and afterwards stacking and fixing by lamination of the shape-changed plant-fibre based components 3 to each other in the stacking and fixing step III.

With the new process, a 3D form is achieved without externally applied forces or chemically or mechanically weakening of the material. The self-shaped shape-changed laminated plant-fibre based components 3 are part and template at the same time for the manufacturing of shaped laminated multi-layer plant-fibre based construction components 4.

In Figure 2, the method is explained starting with two plant-fibre based elements 0, 0' showing different dimensional changes in the same direction, when applying the same stimulus 2 change. Both plant-fibre based elements 0, 0' are joined out of plane in z-direction to obtain a multi-element bilayer 1', usually at a first condition. Different bilayers 1' are depicted, which can be connected in lateral direction (x, y-direction). Then the self-forming process of the multi-element bilayer 1' is carried out while or after the external stimulus 2 change is applied. Here, the first relative humidity RH1 and the first temperature T1, which had given a first sample moisture content U1 are varied to a second relative humidity RH2 and the second temperature T2, which result in a second sample moisture content U2. Here the sample moisture content is decreased to U2=12%, while T2 may be equal to or different from T1.
In practice the stimulus 2 change is applied for at least one hour respectively a couple of hours. For commercial reasons, the stimulus change should in particular last a couple of hours.

The result of the self-forming step II after the stimulus 2 change is here a shape-changed bilayer 3'. A multiplicity of such a shape-changed bilayer 3' is then connected in the stacking and fixing step III, resulting in a laminated bilayer stack 4', which is in particular laminated by vacuum lamination. After the lamination respectively the stacking and fixing step III, the condition can be changed, while the resulting shaped laminated multi-layer plant-fibre based construction components 4 are stable in shape. Optionally a multiplicity of shape-changed bilayers 3' can be connected in x, y-direction before or with the stacking and fixing step III.
With this method, beams or plates can be produced, showing a desired shape change.

In one example, a spruce beam 0 and a beech beam 0' with different fibre orientations were connected. Both types of wood show different behaviour, if the relative humidity is changed. If the fibre orientation of both beams is optimized, the beech beam will show larger dimensional changes in one direction than the spruce beam. A multi-element bilayer 1' shows a shape change, which will remain constant for stable moisture content U of the two beams 0 and 0'.

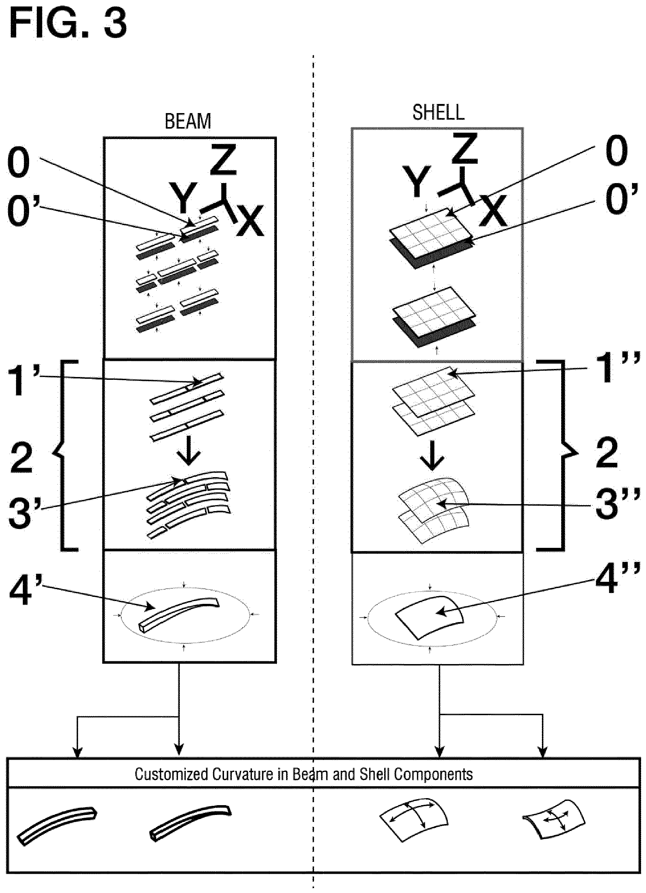

As shown in Figure 3, besides beam production as depicted in the left column, also shells and other plate-like shaped forms can be produced as depicted in the right column. For shell manufacturing, a multiplicity of plant-fibre based elements 0, 0' with known dimensional changes during application of the same stimulus 2 change are connected in the multi-element joining step I, building multi-element plant-fibre based components 1 in form of a multi-element in-plane layer 1". During application of the stimulus 2 change from first condition (RH1, T1, U1, ...) to second condition (RH2, T2, U2, ...) in the self-forming shape-change step II, the multi-element in-plane layer 1" is self-formed leading toshape-changed in-plane layer 3". According to the desired shell, a multiplicity of shape-changed in-plane layer 3" is connected during the subsequent stacking and fixing step III, building laminated in-plane layer 4", which in particular are laminated by vacuum lamination.

As shown in Figure 3, curved or twisted beams made of laminated bilayers 4' and synclastic or anticlastic shells can be made with stacks of laminated in-plane layer 4".

According to the process, each plant-fibre based element 1 may consist of one, two, or more layers in z-direction, which have been equilibrated to the initial sample moisture content U1. An external stimulus 2 change is applied, before they are stacked and fixed together in either flat or curved state. Each layer may consist of one or more elements, which are laterally fixed together. It is also possible to manufacture parts of two or more layers with one layer consisting of one element only, with the parts then laterally bonded to each other.

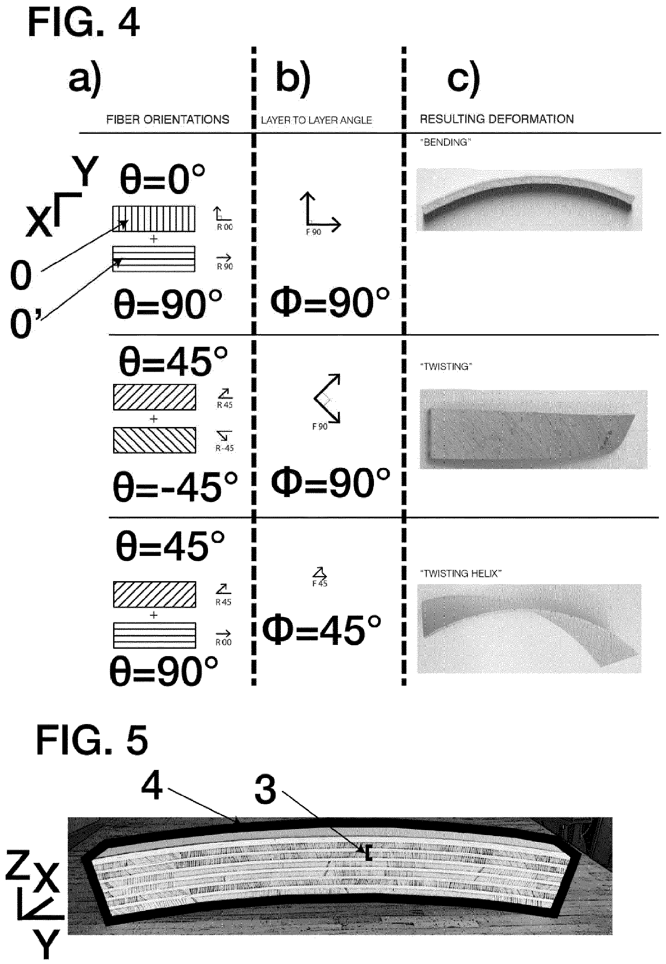

The single plant-fibre based elements 0, 0' within a multi-element plant-fibre based component 1 may exhibit differential fibre orientation and differential annual ring orientation leading to different isotropic or anisotropic dimensional changes of the different plant-fibre based elements 0 due to the external stimulus 2. For bi-layered or multi-layered parts, the single, continuous layers exhibit differential fibre orientation (left column) with a fibre angle of 0-90° between fibre direction of the layers. Next to this, this angular set-up of continuous layers may be rotated in the range of 0-180° in respect to the reference coordinate system of the wood component (rotation angle), as depicted in Figure 4.

The differential orientation of the material in the two layers 0, 0', defined by the fibre angle theta, can be in the range of a few degree up to 90°. The orientation of the material in respect to the coordinate system of the part, defined by the rotation angle phi can be in the range of 0° to 180°. In case of theta=90° and phi=0° or 90°, pure bending is achieved, whereas for theta=90° and phi= 45° or-45° pure twist is achieved. Other combinations lead to combined twisting and bending, as depicted in Fig. 4c) third row.

By lateral fixing of elements as well as by stacking and fixing of layers with differential fibre orientation, the anisotropic dimensional changes are transformed into shape changes of the multi-element bilayer 1' or multi-element in-plane layer 1" upon change of sample moisture content. The shape of the final component may exhibit unidirectional curvature, bidirectional curvature (negative (anticlastic) or positive (synclastic) Gaussian curvature), double-curvature, twist, combinations of twist and curvature with possible lateral combinations of these shape changes within one component.

Figure 5 shows a prototype 4' of 1.5m length, 12cm width and 20cm thickness fabricated from six curved shape-changed bilayers 3' of spruce wood. Each shape-changed bilayer 3' consists of one 20mm thick and one 10mm thick board with exhibiting R and L orientation parallel to the long axis of the beam respectively, two spruce boards (L-orientation) with a thickness of 10mm were added on the inside and outside; average radius of 2m; curvature was achieved by a stimulus 2 change of sample/wood moisture content from 20% to 9%. As adhesive, a glue based on Polyurethane was used.

Shape changing of multi-element bilayer 1' has been successfully demonstrated for sizes of up to 40mm thickness, 220cm length and 20cm width and for differences in sample/wood moisture content as stimulus 2 change of up to 11%. Such multi-element bilayer 1' resulted in curved shape-changed bilayers 3' have been stacked and laminated for obtaining a curved wood part 4' with the shape fixed by the stacking and laminating.

Drying of bilayers for introducing shape change performing self-forming shape-change step II has been successfully conducted at a temperature of 55°C in a ventilated climate chamber for accelerated drying resembling mild kiln-drying conditions.

The obtained curvature changes were comparable to those obtained at room temperature according to prior art methods, without any visible damage due to failure of the glue at this temperature.

Prediction of curvature has been achieved with a deviation of as low as 10% from experimentally determined curvature. Scanning of wood and digital design have been demonstrated previously.

For fixing of plant-fibre based elements 0 and shaped changed plant-fibre based components 2, any kind of fixing technology can be used such as for instance
- bonding by appropriate adhesives,
- mechanical fixing such as with bolts, screws or cables
- mechanical interconnection by for instance finger joints, welding, sewing, stitching, etc.
In case of bonding by adhesives, the required pressure during bonding can be applied by either a press machine (for flat parts), by vacuum lamination or by screw clamping.

The single shape-changed plant-fibre based components 3, which are stacked and fixed to each other to obtain the final shaped laminated multi-layer plant-fibre based construction components 4, are manufactured either in flat state or in an initially curved state at a specific sample moisture content U1 they have been equilibrated to in condition RH1 and T1.

In the final step, the parts are stacked on top of each other and/or laterally to each other and fixed together to obtain the final complex shaped component 4. By stacking these parts 3 and fixing them together, any further shape change of the parts 3 and the final component 4 in response to changes of ambient relative humidity is largely prevented and the final multi-layered component 4 keeps its final, programmed shape independent of the ambient relative humidity.

The shape change of the multi-element plant-fibre based components 1 from their initial state during manufacturing to the final shape is achieved by changing the sample moisture content of the wood parts by changing ambient relative humidity and/or temperature. Wood can for instance be taken into production at a high moisture content without prior technical (kiln) drying. The usual kiln-drying process to reach process and service conditions may be utilized to achieve the programmed shape change of the parts 1.

It is also possible to combine the new process with the conventional processes of manufacturing curved structures. Hereby, a self-deformed shaped-changed laminated plant-fibre based component or a shaped laminate serves as a template for the final complex shaped component. Further layers or parts are then fixed to this template by elastic cold- or hot-bending for obtaining the final complex shaped component. This combination allows for formwork-free manufacturing, while it also allows for manufacturing gluelam-like structures with unidirectionally oriented fibres.

Plant-fibre based elements 0, 0' and resulting shaped laminated multi-layer plant-fibre based components 4 can be fixed to each other by means of appropriate fixing technology, which allows and endures the necessary shape change, the environmental conditions, and the arising inner stresses in the complex shaped component 4 during service. Such fixing technology may be represented by, but is not limited to bonding using an appropriate adhesive, mechanical fixing by screws or bolts, mechanical interconnection by e.g. finger joints, sewing, stitching, welding, etc.. In case of plant-fibre based, adhesive bonding is conducted using any appropriate adhesive specified for wood, which is suitable and certified for bonding wood with special regard to the specific sample moisture content of the elements, layers, parts and components at the time of bonding. In one case, this can be a one component polyurethane adhesive (1K-PUR).

### Input stimulus

Any input stimulus 2 is appropriate, which leads to dimensional changes of the material. In case of plant-fibre based elements, the input stimulus 2 can be the ambient relative humidity, temperature or a combination of both. The input stimulus changes lead to changes in sample moisture content and, therefore, to anisotropic dimensional changes.

Experiments showed good results starting with an initial sample moisture content Uinitial between 0-30% and ending at Uend between 5% and 15% or a deltaU between 2% and 15%.

Typical temperature range between Tinitial and Tend is between 10°C and 60°C, while an increase or decrease are possible.

The time scale of the process, respectively the input stimulus change is in particular in the range of a couple of hours, in particular applied for four hours. Of course the self-forming shape-change II can last at least one day or multiple days.

The here described process requires predicting the shape change of the plant-fibre based elements 0, 0' respectively multi-element plant-fibre based components 1, which requires experience or a simulation software and a scanning and sorting of the wood, as the shape change depends on annual ring orientation and fibre direction. The planning process might become more complex as digitally designed parts may have to be assigned to specific regions on wood boards. Wood is a biological material with intrinsic variability of properties, which influence the predictability and, thus, this has to be taken into account for defining tolerable limitations in accuracy of e.g. curvature, and for setting up the digital design tool and the industrial manufacturing process.

Experiments showed, that the steps II and III can also be applied to single plant-fibre based elements 0 before connection to others before. In this case, the one layer of plant-fibre based element 0 consists of a gradient material, which exhibits a gradually different coefficient of dimensional change along at least one direction to achieve a shape change. The plant-fibre based elements 0 are connected after the self-forming step II with the stacking and fixing step III, as described above, forming stacks of layered laminated bilayer 4'. Again the self-forming step II is carried out by a stimulus 2 change from an initial state to a resulting state, while the plant-fibre based elements 0 may be initially flat or initially curved and undergo programmed shape changes to reach the complex shaped final state upon change of an appropriate input stimulus 2. The stacking and fixing of the parts to obtain the final component prevents any further shape change of the component during service. The shape of the final component may exhibit unidirectional curvature, bidirectional curvature (negative or positive Gaussian curvature), double-curvature, twist, combinations of twist and curvature with different locations within the component possibly exhibiting different curvature in possibly different directions. The stacked parts have compatible states of curvature for stacking and fixing, but may be different in size and geometry.

For anisotropic materials, the same material can be used for two layers of plant-fibre based element 0, 0'. Yet different orientation of the material in the two layers is used for inducing a differential dimensional change of the two layers in at least one direction of the part. In one case, such an anisotropic material could be wood. For anisotropic materials, layers consisting of more than one element may exhibit different orientation of the material in the single elements for achieving for instance bidirectional curvature.

### LIST OF REFERENCE NUMERALS

0 plant-fibre based element
1 multi-element plant-fibre based component (initial condition)
1' multi-element bilayer (joint out of plane in z-direction)
1" multi-element in-plane layer (joint in x, y direction)
2 stimulus (ΔT, ΔRH)
3 shape-changed plant-fibre based component (after stimulus, different dimensional changes)
3' shape-changed bilayer
3" shape-changed in-plane layer
4 shaped laminated multi-layer plant-fibre based construction component
4' (vacuum) laminated bilayer (stacks)
4" (vacuum) laminated in-plane layer (stacks)
I multi-element joining step
II self-forming shape-change
III stacking and fixing step

## Claims

1. Manufacturing method of shaped laminated multi-layer plant-fibre based construction components (4) of isotropic or anisotropic plant-fibre based elements (0, 0'), comprising fibre based materials, **characterized in that:**
- plant-fibre based elements (0, 0') are deformed by a self-forming shape-change step (II) forming shape-changed laminated plant-fibre based components (3) by application of an input stimulus (2) change from initial condition with initial relative humidity (RH1) and initial Temperature (T1) having resulted in an initial sample moisture content (U1, U1') to service condition with end relative humidity (RH2) and end Temperature (T2) leading to an end sample moisture content (U2) for a moisture change delta U between 1% to 30% and/or a Temperature change (deltaT) between 10°C and 70°C, before
- the shape-changed plant-fibre based components (3) are stacked and connected in a stacking and fixing step (III) forming shaped laminated multi-layer plant-fibre based construction components (4) for eventual further treatment.

2. Manufacturing method according to claim 1, wherein the stacking and fixing step (III) is done by a bonding technique using an adhesive and a vacuum lamination procedure.

3. Manufacturing method according to claim 1 or 2, wherein the stacking and fixing step (III) is carried out at service condition with end relative humidity (RH2) and/or end Temperature (T2).

4. Manufacturing method according to one of the preceding claims, wherein at least two plant-fibre based elements (0, 0') are joined in a multi-element joining step (I) at first condition of sample moisture content (U1, U1') and/or initial Temperature (T1) together out of plane in z-direction, before the self-forming shape-change step (II) is carried out while change of input stimulus (2), resulting in shape-changed bilayers (3'), wherein a multiplicity of shape-changed bilayers (3') is subsequently stacked and fixed in z-direction in the stacking and fixing step (III) at end sample moisture content (U2) and/or end Temperature (T2).

5. Manufacturing method according to claim 4, wherein a multiplicity of shaped changed bilayers (3') is stacked and fixed forming laminated bilayer stacks (4').

6. Manufacturing method according to one of the claims 1 to 3, wherein at least two plant-fibre based elements (0, 0') are joined in a multi-element joining step (I) at first condition of sample moisture content (U1) and/or initial Temperature (T1) together in x,y-direction, before the self-forming shape- change step (II) is carried out while change of input stimulus (2), resulting in shape-changed in-plane layer (3"), wherein a multiplicity of shape-changed in-plane layer (3") is subsequently stacked and fixed in z-direction in the stacking and fixing step (III) at end sample moisture content (U2) and/or end Temperature (T2).

7. Manufacturing method according to claim 6, wherein a multiplicity of shape-changed in-plane layer (3") are stacked and fixed forming laminated in-plane layer stacks (4").

8. Manufacturing method according to one of the preceding claims, wherein while applied self-forming shape-change step (II) the initial sample moisture content U(initial) of the plant-fibre based elements (0, 0') between 0% and 30% is changed to a sample moisture content U(end) at service condition between 5% and 20%, leading to a sample moisture change delta U between 1% to 20%.

9. Manufacturing method according to one of the preceding claims, wherein the shaped laminated multi-layer plant-fibre based construction components (4) are manufactured from in initial condition flat formed plant fibre based elements (0) or flat formed multi-element plant-fibre based components (1), which are curved through self-forming shape-change (II) while application of the input stimulus change from initial condition (T1, U1) to service condition (T2, U2).

10. Manufacturing method according to one of the preceding claims, wherein the Temperature is increased during self-forming shape-change (II) from initial Temperature (T1) to end Temperature (T2), T1 < T2.

11. Manufacturing method according to one of the preceding claims, wherein the input stimulus (2) change during self-forming shape-change (II) is applied in a defined way for at least one until a couple of hours, in particular for four hours.

12. Manufacturing method according to one of the preceding claims, wherein the plant-fibre based elements (0, 0') are species of wood.
